(19)

Europäisches Patentamt
European Patent Office
Office européen des brevets

(11) **EP 1 930 902 A1**

(12) **EUROPEAN PATENT APPLICATION**

(43) Date of publication:
**11.06.2008 Bulletin 2008/24**

(51) Int Cl.:
***G11B 27/10*** (2006.01)    ***G11B 27/34*** (2006.01)

(21) Application number: **07254140.2**

(22) Date of filing: **18.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **08.12.2006 JP 2006332226**

(71) Applicant: **Sony Corporation**
**Tokyo (JP)**

(72) Inventors:
• **Noriyuki, Yamamoto**
**c/o Sony Corporation**
**Tokyo (JP)**
• **Mitsuhiro, Miyazaki**
**c/o Sony Corporation**
**Tokyo (JP)**

(74) Representative: **Nicholls, Michael John**
**J.A. Kemp & Co.**
**14, South Square**
**Gray's Inn**
**London WC1R 5JJ (GB)**

(54) **Display control processing apparatus, display control processing method and display contrlo processing program**

(57) Disclosed herein is a display control processing apparatus including: display control means configured to display pieces of metadata for a predetermined group of music each serving as a favorite with a user on a metadata display portion for displaying the pieces of metadata in a format allowing the user to specify a desired piece of the metadata; specification means configured to specify a piece of the metadata displayed on the metadata display portion by the display control means; determination means configured to select a music with its metadata corresponding to metadata specified by the specification means from the pieces of metadata displayed by the display control means on the metadata display portion as metadata for the predetermined group of music and to determine the selected music as music to be recommended to the user; and reproduction means configured to reproduce music determined by the determination means.

F I G . 1

EP 1 930 902 A1

**Description**

CROSS REFERENCES TO RELATED APPLICATIONS

The present invention contains subject matter related to Japanese Patent Application JP 2006-332226 filed in the Japan Patent Office on December 8, 2006, the entire contents of which being incorporated herein by reference.

BACKGROUND OF THE INVENTION

1. Field of the Invention

The present invention relates to a display control processing apparatus, a display control processing method and a display control processing program. More particularly, the present invention relates to a display control processing apparatus capable of recommending music to the user by making use of a very flexible technique, a display control processing method to be adopted by the display control processing apparatus and a display control processing program implementing the display control processing method.

2. Description of the Related Art

In the past, there was proposed an invention for searching contents such as television programs, music, and the like on the basis of favorites with the user (for example, refer to Japanese Patent Laid-open No. 2004-194107).
In a process to recommend a content, normally, an emphasis filtering technique and/or a content based filtering technique are adopted. In the following description, the emphasis filtering technique is referred to as a CF whereas the content best filtering technique is referred to as a CBF technique.
To put it in detail, in accordance with the CF technique, content-purchasing histories of users are managed as information on favorites with the users and, for a first user to which a content is to be recommended, a second user having a content-purchasing history similar to the one of the first user is identified. Then, a content already purchased by the second user but not owned yet by the first user is recommended to the first user. Typically, the CF technique is adopted at a mail-order sale site in the Internet.
In accordance with the CBF technique, on the other hand, metadata provided by a content distributor and a content seller for contents is indirectly used in a process to extract a favorite and/or a process to recommend a content to a user. That is to say, characteristic vectors each obtained as a result of a process to convert various kinds of metadata are used as information on a favorite with a user. To put it concretely, a distance between a characteristic vector indicating a favorite with a user and each of characteristic vectors of contents each serving as a candidate for a favorite is computed and a content having a shortest distance is recommended to the user as a content matching a favorite with the user. In the following description, the characteristic vector indicating a favorite with a user is referred to as a user favorite vector whereas the characteristic vector of a content is referred to as a content characteristic vector. Typically, such a distance is computed as the value of a cosine correlation between the user favorite vector and the content characteristic vector.

SUMMARY OF THE INVENTION

In accordance with the content recommendation method in related art adopting the CF or CBF technique, however, a content according to information on favorites with a user is merely recommended to the user in a standardized manner. That is to say, not adopting a flexible content recommendation technique, the content recommendation method in related art does not present selectable content recommending information to a user as information to be used by the user in determining a content serving as a favorite with the user so that the user may not determine a content serving as a favorite with the user on the basis of information specified by the user.
According to an embodiment of the present invention, it is desirable to provide a very flexible content recommendation method.
In accordance with an embodiment of the present invention, there is provided a display control processing apparatus including the followings. First, display control means configured to display pieces of metadata for a predetermined group of music each serving as a favorite with a user on a metadata display portion for displaying the pieces of metadata in a format allowing the user to specify a desired piece of aforementioned metadata. Second, specification means configured to specify a piece of aforementioned metadata displayed on the metadata display portion by the display control means. Third, determination means configured to select music with its metadata corresponding to metadata specified by the specification means from the pieces of metadata displayed by the display control means on the metadata display portion as metadata for the predetermined group of music and to determine the selected music as music to be recommended to the user. Fourth, reproduction means configured to reproduce music determined by the determination means. The display control means displays specific metadata corresponding to the metadata of music being reproduced by the reproduction means on the metadata display portion while moving the specific metadata.

It is also desirable to provide the display control processing apparatus with a configuration in which the display control means displays metadata matching a favorite with the user on the metadata display portion in a format different from other metadata.

It is also desirable to provide the display control processing apparatus with a configuration in which the display control means displays metadata for music being reproduced by the reproduction means on the metadata display portion in a state of being interlocked with the music.

It is also desirable to provide the display control processing apparatus with a configuration in which the display control means measures the length of time in which metadata is not specified and displays the metadata on the metadata display portion in a format according to the measured length.

It is also desirable to provide the display control processing apparatus with a configuration in which the metadata display portion includes a first display portion and a second display portion. It is also desirable to provide the display control processing apparatus with a configuration in which the display control means displays metadata on the first display portion as metadata having a predetermined relation with metadata displayed on the second display portion.

It is also desirable to provide the display control processing apparatus with a configuration further including a characteristic/character generation means configured to generate music characteristic information representing the characteristic of music or user character information representing a character exhibited by the user with respect to music of a type determined in advance. In this configuration the display control means displays the degree of a characteristic represented by the music characteristic information generated by the characteristic/character generation means or the degree of a character represented by the user character information generated by the characteristic/character generation means on a characteristic/character display portion. The display control means then receives a change specified as a change of the degree of a characteristic represented by the music characteristic information or a change of the degree of a character represented by the user character information. Further, the display control means displays metadata corresponding to the change of the degree of a characteristic represented by the music characteristic information or the change of the degree of a character represented by the user character information on the metadata display portion.

It is also desirable to provide the display control processing apparatus with a configuration in which the metadata display portion includes a first display portion and a second display portion. The metadata display portion displays a plurality of pieces of aforementioned metadata on the first display portion while moving the pieces of aforementioned metadata over the metadata display portion. For each metadata group, the metadata display portion displays a plurality of predetermined pieces of aforementioned metadata on the second display portion in a format allowing any one of the pieces of aforementioned metadata to be specified. Further, when any one of the pieces of aforementioned metadata displayed on the second display portion is specified, the determination means selects music having metadata corresponding to the specified piece of aforementioned metadata and recommends the selected music to the user as a recommended music.

In accordance with another embodiment of the present invention, there is provided a display control processing method or a display control processing program. The display control processing method or the display control processing program includes the step of displaying pieces of metadata for a predetermined group of music each serving as a favorite with a user on a metadata display portion for displaying the pieces of metadata in a format allowing the user to specify a desired piece of aforementioned metadata. Further, the display control processing method or program includes the steps of: specifying a piece of aforementioned metadata displayed on the metadata display portion in a process carried out at the display control step; and selecting music with its metadata corresponding to metadata specified in a process carried out at the metadata specification step from the pieces of metadata displayed in a process carried out at the display control step on the metadata display portion as metadata for the predetermined group of music and determining the selected music as music to be recommended to the user. Still further, the display control processing method or program includes the step of reproducing a content determined in a process carried out at the content determination step. The display control step is carried out to display specific metadata corresponding to the metadata of music being reproduced in a process carried out at the content reproduction step on the metadata display portion while moving the specific metadata.

In the display control processing apparatus according to the embodiment of the present invention as well as the display control processing method and the display control processing program, pieces of metadata for a predetermined group of music each serving as a favorite with a user are displayed on a metadata display portion for displaying the pieces of metadata in a format allowing the user to specify a desired piece of aforementioned metadata. Then a piece of aforementioned metadata displayed on the metadata display portion is specified. Further, music with its metadata corresponding to metadata specified is selected from the pieces of metadata displayed on the metadata display portion as metadata for the predetermined group of music, the selected music is determined as music to be recommended to the user and the determined content is reproduced. Then the metadata for the music being reproduced is displayed on the metadata display portion while the metadata is being moved.

In accordance with embodiments of the present invention, there are provided a display control processing apparatus, a display control processing method and a display control processing program, which adopt a very flexible technique.

BRIEF DESCRIPTION OF THE DRAWINGS

These and others and features of the present invention will become clear from the following description of the preferred embodiments given with reference to the accompanying diagrams, in which:

Fig. 1 is a block diagram showing a typical configuration of a reproduction apparatus according to an embodiment of the present invention;
Fig. 2 is a diagram showing an example of a displayed reproduction screen;
Fig. 3 is a block diagram showing a typical configuration of a reproduction-screen generation section employed in the music reproduction apparatus shown in Fig. 1;
Fig. 4 is a block diagram showing a typical configuration of a playlist generation section employed in the music reproduction apparatus shown in Fig. 1;
Fig. 5 is a block diagram showing a typical configuration of a matching process section employed in the playlist generation section shown in Fig. 4;
Fig. 6 is a diagram showing a separation plane used by a character-quantity determination section employed in the playlist generation section shown in Fig. 4;
Fig. 7 is a block diagram showing a typical configuration of a content sorting section employed in the playlist generation section 18 shown in Fig. 4;
Fig. 8 shows a flowchart to be referred to in explanation of processing to recommend music to the user;
Fig. 9 is a diagram to be referred to in explaining the concepts of clusters obtained as a result of classifying music and cluster layers each including clusters, that is, the concept of multi-viewpoint clusters;
Fig. 10 shows a diagram to be referred to in explanation of a technique for generating character information as a diagram showing a typical concrete result of a process to classify music into multi-viewpoint clusters; and
Fig. 11 is a block diagram showing a typical configuration of an embodiment implementing a computer serving as the music reproduction apparatus according to an embodiment of the present invention.

DETAILED DESCRIPTION OF THE PREFERRED EMBODIMENTS

Before preferred embodiments of the present invention are explained, relations between disclosed inventions and the embodiments are explained in the following comparative description. Embodiments supporting the disclosed inventions are described in this specification and/or shown in diagrams. It is to be noted that, even if there is an embodiment described in this specification and/or shown in diagrams but not included in the following comparative description as an embodiment corresponding to an invention, such an embodiment is not to be interpreted as an embodiment not corresponding to an invention. Conversely speaking, an embodiment included in the following comparative description as an embodiment corresponding to a specific invention is not to be interpreted as an embodiment not corresponding to an invention other than the specific invention.

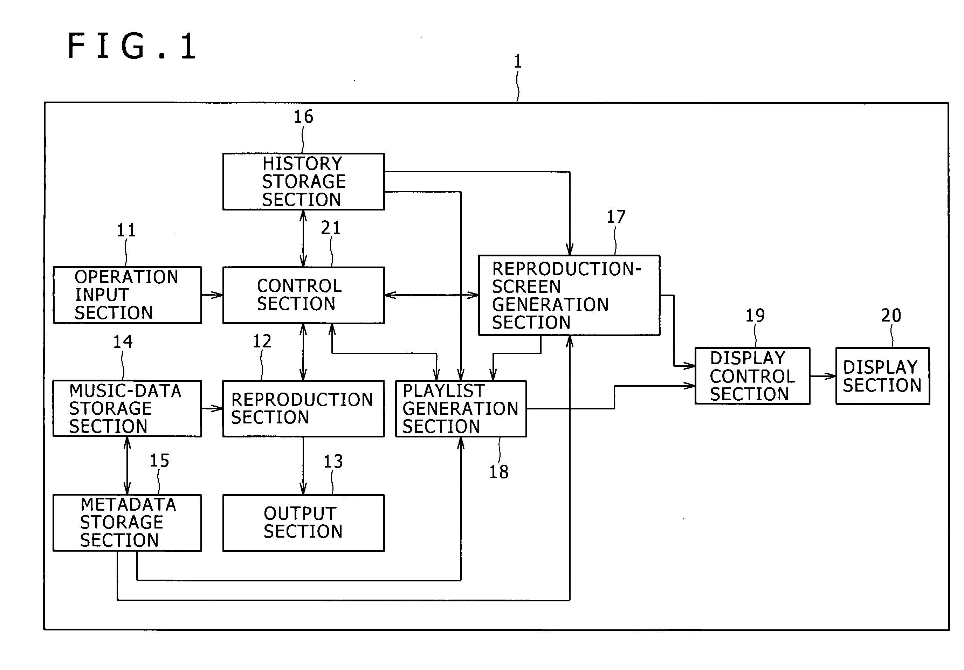

In accordance with a first embodiment of the present invention, there is provided a display control processing apparatus employing: display control means (such as a reproduction-screen generation section 17, a display control section 19 and a control section 21, which are employed in a reproduction apparatus 1 shown in Fig. 1) configured to display pieces of metadata for a predetermined group of music each serving as a favorite with a user on a metadata display portion for displaying the pieces of metadata in a format allowing the user to specify a desired piece of aforementioned metadata; specification means (such as a operation input section 11 employed in the reproduction apparatus 1 shown in Fig. 1) configured to specify a piece of aforementioned metadata displayed on the metadata display portion by the display control means; determination means (such as a playlist generation section 18 employed in the reproduction apparatus 1 shown in Fig. 1) configured to select music with its metadata corresponding to metadata specified by the specification section from the pieces of metadata displayed by the display control means on the metadata display portion as metadata for the predetermined group of music and to determine the selected music as music to be recommended to the user; and reproduction means (such as the control section 21 and a reproduction section 12, which are employed in the reproduction apparatus 1 shown in Fig. 1) configured to reproduce music determined by the determination section. The display control means displays specific metadata corresponding to the metadata of music being reproduced by the reproduction section on the metadata display portion while moving the specific metadata.

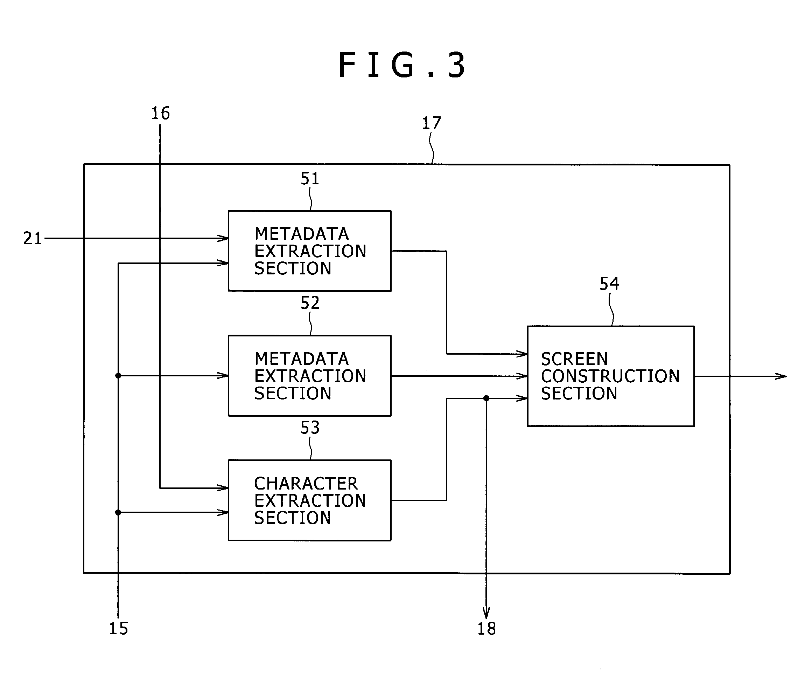

According to an embodiment of the present invention, the display control processing apparatus with a configuration further including characteristic/character generation means (such as a character extraction section 53 employed in the reproduction-screen generation section 17 shown in Fig. 3) configured to generate music characteristic information representing the characteristic of music or user character information representing a character exhibited by the user with respect to music of a type determined in advance. In this configuration the display control means: displays the degree of a characteristic represented by the music characteristic information generated by the characteristic/character generation means or the degree of a character represented by the user character information generated by the characteristic/character generation means on a characteristic/character display portion; receives a change specified as a change of the degree of a characteristic represented by the music characteristic information or a change of the degree of a character represented by the user character information; and displays metadata corresponding to the change of the degree of a characteristic represented by the music characteristic information or the change of the degree of a character represented by the user character information on the metadata display portion.

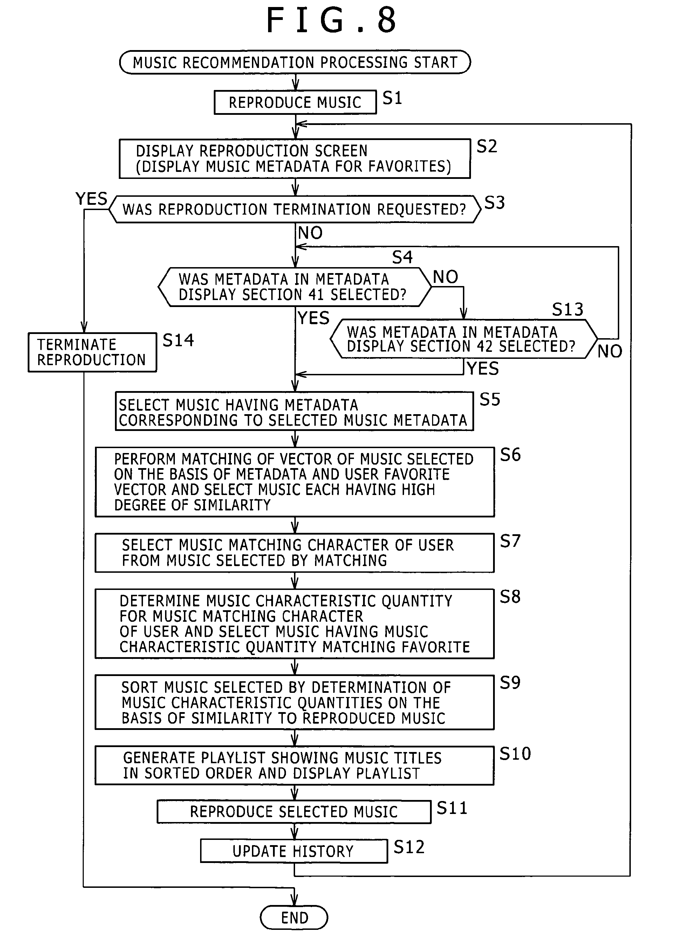

In accordance with a second embodiment of the present invention, there is provided a display control processing method or a display control processing program. The display control processing method or the display control processing program includes: a display control step (such as a step S2 of a flowchart shown in Fig. 8) of displaying pieces of metadata for a predetermined group of music each serving as a favorite with a user on a metadata display portion for displaying the pieces of metadata in a format allowing the user to specify a desired piece of aforementioned metadata; a metadata specification step (such as a step S4 of the flowchart shown in Fig. 8) of specifying a piece of aforementioned metadata displayed on the metadata display portion in a process carried out at the display control step; a content determination step (such as steps S5 to S10 of the flowchart shown in Fig. 8) of selecting music with its metadata corresponding to metadata specified in a process carried out at the metadata specification step from the pieces of metadata displayed in a process carried out at the display control step on the metadata display portion as metadata for the predetermined group of music and determining the selected music as music to be recommended to the user; and a content reproduction step (such as step S11 of the flowchart shown in Fig. 8) of reproducing a content determined in a process carried out at the content determination step. The display control step is carried out to display specific metadata corresponding to the metadata of music being reproduced in a process carried out at the content reproduction step on the metadata display portion while moving the specific metadata.

Fig. 1 is a block diagram showing a typical configuration of a reproduction apparatus 1 to which the present invention is applied.

An operation input section 11 is an input device typically employing a touch panel and ten-character keys. The operation input section 11 notifies a control section 21 of an operation carried out by the user on the operation input section 11.

A reproduction section 12 reads out a proper music from a music-data storage section 14 in a reproduction process in accordance with control executed by the control section 21. Audio data obtained as a result of the reproduction process is supplied to an output section 13 typically employing a speaker.

The music-data storage section 14 is a unit used for storing the music data of reproducible music.

A metadata storage section 15 is a unit used for storing metadata of every music stored in the music-data storage section 14.

Music according to a recommendation made to the user and accepted by the user is regarded as a content serving as a favorite with the user, and information on the favorite content is stored in a history storage section 16 as history information. An example of the music according to a recommendation made to the user and accepted by the user is a content reproduced by the reproduction section 12. The information on music serving as a favorite with the user is typically the metadata of the content. The metadata of music serving as a favorite with the user is supplied to the history storage section 16 by way of the control section 21.

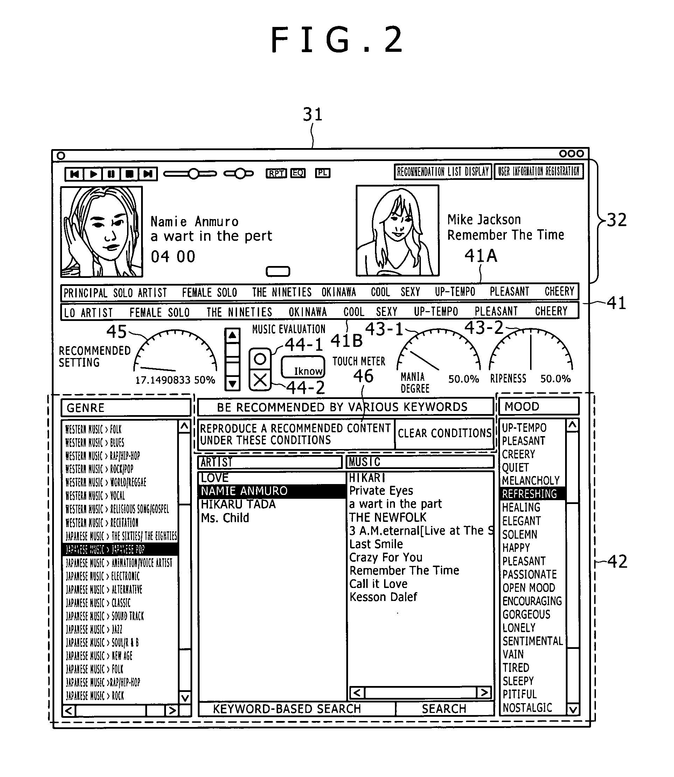

In a process synchronized to a process of reproducing music, a reproduction-screen generation section 17 generates a reproduction screen 31 like one shown in Fig. 2 and displays the reproduction screen 31 on a display section 20 through a display control section 19.

As shown in the figure, the reproduction screen 31 typically includes information on music being reproduced by the reproduction section 12 and information on music to be reproduced next. In the typical reproduction screen 31 shown in Fig. 2, the information on music being reproduced by the reproduction section 12 is displayed on the left side of a display area 32 of the reproduction screen 31 whereas the information on music to be reproduced next is displayed on the right side of the display area 32. The information on music being reproduced by the reproduction section 12 includes the image of a jacket of the content and the artist singing the content. By the same token, the information on music to be reproduced next includes the image of a jacket of the content and the artist singing the content.

In addition, the reproduction screen 31 also includes metadata display portions 41 and 42 displaying the metadata determined in advance selectably.

In the typical reproduction screen 31 shown in Fig. 2, the metadata display portion 41 include display portions 41A and 41B, which are each a long row lined in the horizontal direction. The display portions 41A and 41B are each displayed metadata flowing in the direction from the right to the left at a velocity determined in advance. That is to say, the metadata is shown in a ticker display.

It is to be noted that the metadata shown in a ticker display in the metadata display portion 41 is typically metadata determined in advance for music being reproduced. The metadata is typically data items determined in advance. The data items of the typical metadata shown in a ticker display in the metadata display portion 41 for music typically include the artist, era, region, and mood of the music. To put it concretely, in the typical metadata display portion 41, the artist is a female solo singer, the era is the nineties, the region is Okinawa and the mood is a up-tempo mood.

The metadata display portion 42 displays lists each showing pieces of metadata associated with a data item determined in advance. The data items determined in advance in the typical metadata display portion 42 shown in Fig. 2 are the genre, the artist, the title and the mood. Thus, the lists each displayed as a column in the metadata display portion 42 are genre, artist, title and mood lists.

In addition, the reproduction screen 31 also includes information on the degree of mania and the degree of ripeness, which are based on character information representing a character exhibited by a user with respect to music of a type determined in advance. To put it concretely, the typical reproduction screen 31 of Fig. 2 shows a meter 43-1 indicating the degree of mania and a meter 43-2 indicating the degree of ripeness.

On the top of that, the reproduction screen 31 also includes buttons 44-1 and 44-2 to be operated for evaluating music being reproduced. In addition, the reproduction screen 31 also includes a meter 45 for changing the degree of mania exhibited by the user.

If the user likes music being reproduced, the user makes use of the operation input section 11 to operate the button 44-1 in order to evaluate the content. If the user dislikes music being reproduced, on the other hand, the user makes use of the operation input section 11 to operate the button 44-2 in order to devaluate the content. The evaluation made in this operation is stored as one of the history information.

In addition, the user can also make use of the operation input section 11 to operate the meter 45 in order to specify a degree of mania. When the user makes use of the operation input section 11 to operate the meter 45 in order to specify a degree of mania, music is recommended to the user in accordance with the specified degree of mania.

On the top of that, the reproduction screen 31 also includes a button 46 to be operated by the user when the user desires reproduction of a recommended music associated with selected pieces of metadata displayed in the metadata display portion 42.

Referring back to Fig. 1, a playlist generation section 18 is a unit for generating a playlist showing music each determined as a content recommended to the user. Such a recommended music is determined on the basis of metadata selected by the user from pieces of metadata displayed in the metadata display portion 41 or 42 of the reproduction screen 31 displayed by the display section 20. When the user selects metadata from pieces of metadata displayed in the metadata display portion 42, the user also needs to operate the button 46.

In this typical case, the playlist generation section 18 displays the generated playlist on the display section 20 through the display control section 19, superposing the playlist on the reproduction screen 31 shown in Fig. 2. Then, when the user selects a specific music from those shown on the playlist, the specific content is reproduced. In a possible alternative configuration, the generated playlist is not displayed on the display section 20. In this case, when the playlist is generated, music on the top of the playlist is automatically reproduced. The music on the top of the playlist is music most recommended to the user.

The control section 21 is a unit for controlling the other sections.

Fig. 3 is a block diagram showing a typical configuration of the reproduction-screen generation section 17 employed in the reproduction apparatus 1 shown in Fig. 1.

A metadata extraction section 51 is a unit for reading out metadata to be displayed in the metadata display portion 41 of the reproduction screen 31 from the metadata storage section 15 and supplying the metadata to a screen construction section 54.

To put it in detail, in this typical case, the metadata extraction section 51 reads out data items determined in advance for metadata stored in the metadata storage section 15 as metadata, which is associated with an ID received from the control section 21 as the ID of music being reproduced, from the metadata storage section 15 and supplies the data items to the screen construction section 54. In the following description, music being reproduced is also properly referred to as a reproduced music. As described earlier, the data items of the metadata shown in the metadata display portion 41 for music typically include the artist, era, region, and mood of the music. To put it concretely, in the case of the typical metadata display portion 41, the artist is a female solo singer, the era is the nineties, the region is Okinawa and the mood is a up-tempo mood.

On the other hand, a metadata extraction section 52 is a unit for reading out metadata to be displayed in the metadata display portion 42 of the reproduction screen 31 from the metadata storage section 15 and supplying the metadata to the screen construction section 54.

To put it in detail, in this typical case, the metadata extraction section 52 reads out metadata pertaining to predetermined data items such as a genre, an artist, a music title and a mood, which are shown in Fig. 2, from the metadata storage section 15 and supplies the metadata to the screen construction section 54.

A character extraction section 53 is a unit for extracting character information from history information stored in the history storage section 16. As described earlier, the character information is information on a character exhibited by the user with respect to music.

The information on a character exhibited by the user is information representing concepts such as an orientation, a width and a depth. The information on a character exhibited by the user can be used to express a character exhibited by the user with respect to music.

The information representing an orientation means a popular appeal owned by music itself, which is liked by the user. In the following description, the information representing an orientation is properly referred to merely as an orientation. By the same token, in the following description, the information representing a width is properly referred to merely as a width whereas the information representing a depth is properly referred to merely as a depth.

The width and depth exhibited by a user with respect to music is the width and depth of a content experience owned by the user as experience of dealing with the contents classified into clusters determined in advance. An example of the cluster is a genre cluster. Examples of the experience of dealing with music are experiences of purchasing the content and listening to the content.

To be more specific, the width is information on how the range of the content experience is concentrated locally. By grasping the width, it is possible to obtain information on, among others, the possibility of the user to tolerate the width of a range of music to be recommended to the user. On the other hand, the depth is information on the depth of an experience owned by the user as an experience of dealing with music pertaining to a cluster when seeing the contents in cluster units.

The character extraction section 53 supplies the extracted orientation, the extracted width and the extracted depth to the screen construction section 54 and the playlist generation section 18. It is to be noted that concrete examples of a method for generating the pieces of character information will be described later.

The screen construction section 54 is a unit for constructing the reproduction screen 31 in which, typically, metadata received from the metadata extraction section 51 is displayed on the metadata display portion 41 in a ticker display and metadata received from the metadata extraction section 52 is displayed on the metadata display portion 42 as lists.

In addition, the reproduction screen 31 constructed by the screen construction section 54 also includes a meter 43-1 showing an index for an orientation received from the screen construction section 54 as the degree of mania and a meter 43-2 showing an index for the degree of ripeness. The ripeness is information obtained by properly combining a width and a depth, which are received from the character extraction section 53.

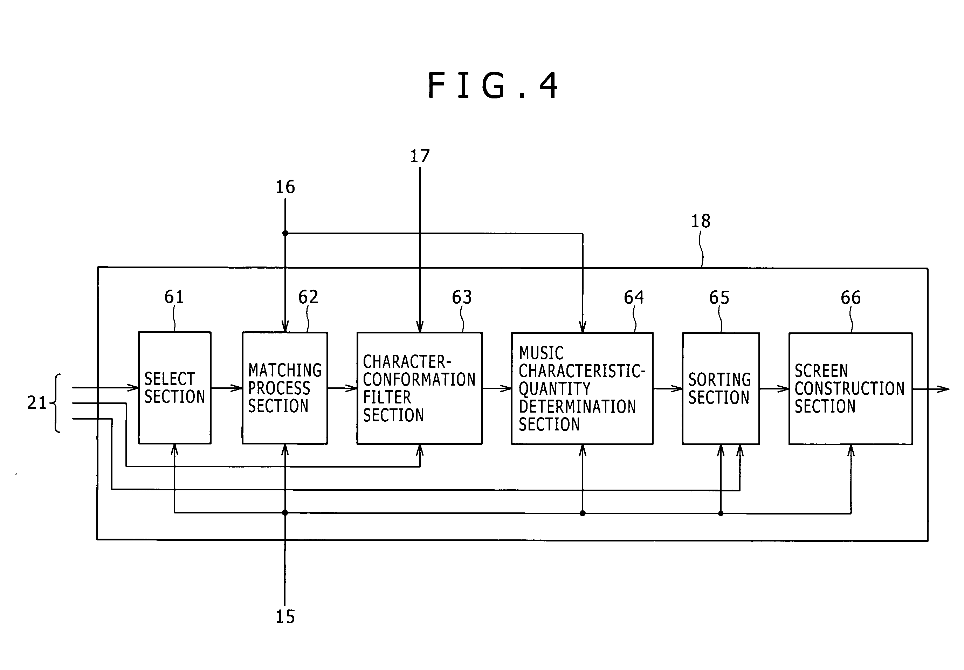

Fig. 4 is a block diagram showing a typical configuration of the playlist generation section 18 employed in the reproduction apparatus 1 shown in Fig. 1.

When metadata displayed in the metadata display portion 41 of the reproduction screen 31 is selected, the control section 21 notifies a content select section 61 of the selected metadata.

The content select section 61 searches the metadata storage section 15 for metadata matching the metadata received from the control section 21 and selects music each having metadata found in the search process. Then, the content select section 61 notifies a matching process section 62 of the selected music. To put it concretely, the content select section 61 supplies the IDs of the selected music to the matching process section 62.

The matching process section 62 is a unit for computing the degree of similarity between the attribute information of each of the music selected by the content select section 61 and user favorite information representing favorites with the user. The attribute information of music includes a plurality of information items each representing an attribute of the music.

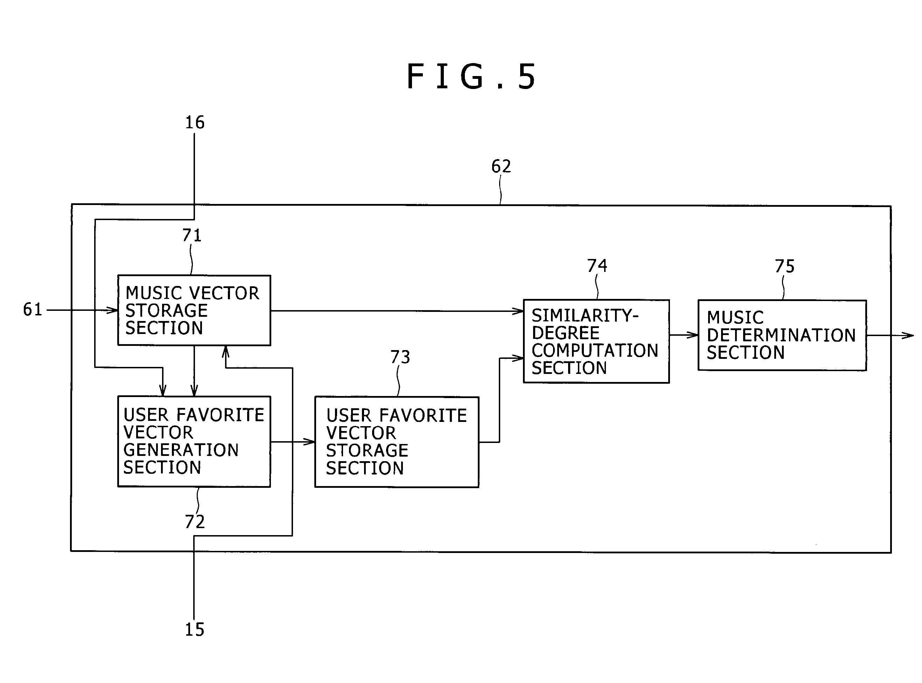

Fig. 5 is a block diagram showing a typical configuration of the matching process section 62 employed in the playlist generation section 18 shown in Fig. 4.

A music vector storage section 71 is a unit for generating a music vector for each music from metadata stored in the metadata storage section 15 as the metadata of the music and storing the music vector therein by associating the music vector with an ID received from the content select section 61 as the ID of the music.

The music vector of a music component has k vector components each representing an attribute of the music. Attributes of music include the name of an artist singing the music and the genre of the music. Thus, a music vector is a k-dimensional vector that can be expressed in terms of k vector components VA as follows:

$$\text{Music vector} = \{VA1, VA2, \cdots, VAk\}$$

The vector component $VAi$ (where $i = 1, 2, \cdots, k$) is also a vector having a vector subcomponents c each corresponding to metadata pertaining to an attribute represented by the vector component VA. Thus, a vector component $VAi$ is a vector that can be expressed in terms of vector subcomponents c as follows:

$$VAi = (c1, c2, \cdots)$$

Let us take a genre vector component VA as an example. The genre vector component VA is expressed in terms of vector subcomponents c, which are the pops, the jazz, the classic, the techno and so on. Thus, generically, a genre vector component VA is expressed in terms of vector subcomponents c as follows:

$$Genre\ vector\ component\ VA = (Pops,\ Jazz,\ Classic, Techno,\ \cdots)$$

If the genre vector component VA is a component of the music vector of a pop music in particular, the genre vector component VA is expressed in terms of numerical vector subcomponents c as follows:

$$Genre\ vector\ component\ VA = (1,\ 0,\ 0,\ 0,\ \cdots)$$

The music vector storage section 71 supplies a music vector stored therein, being associated with the ID received from the content select section 61, to a similarity-degree computation section 74 along with the ID.
Each time a music is reproduced and history information stored in the history storage section 16 is updated, a user favorite vector generation section 72 detects the reproduced music and acquires the music vector of the music from the music vector storage section 71. Then, the user favorite vector generation section 72 cumulatively accumulates the music vector in the user favorite vector storage section 73. To put it in detail, the user favorite vector generation section 72 updates a cumulatively accumulated vector of the music vector. The cumulatively accumulated vector is a user favorite vector representing favorites with the user.
Let us assume for example that the music vector of a reproduced music is expressed as follows:

$$Music\ vector = \{\cdots,\ genre\ VA\ (1,\ 0,\ 0,\ 0,\ \cdots),\ \cdots\}$$

Also let us assume for example that the user favorite vector stored in the user favorite vector storage section 73 is expressed as follows:

$$User\ favorite\ vector = \{\cdots,\ genre\ VA\ (10,\ 8,\ 5,\ 1, \cdots),\ \cdots\}$$

In this case, the user favorite vector is updated to yield the following new value:

$$User\ favorite\ vector = \{\cdots,\ genre\ VA\ (11,\ 8,\ 5,\ 1, \cdots),\ \cdots\}$$

The similarity-degree computation section 74 is a unit for computing the degree of similarity in accordance with Eq. (1) from a music vector received from the music vector storage section 71 as the music vector of a reproduced music and a user favorite vector received from the user favorite vector storage section 73. The music vector received from the music vector storage section 71 is the music vector of a music selected by the content select section 61. The similarity-degree computation section 74 then supplies the computed degree of similarity to a music determination section 75 along with the music ID received from the music vector storage section 71.

[Equation 1]

Degree of similarity =

$$\sum_{1}^{i=k} \frac{\text{Music vector VAi of music A} \cdot \text{Music vector VAi of music A}}{|\text{Music vector VAi of music A}| \times |\text{Music vector VAi of music B}|}$$

$$\cdots \quad (1)$$

The music determination section 75 selects a music having a similarity degree at least equal to a reference determined in advance from music identified by music IDs each received from the similarity-degree computation section 74, and supplies the ID of the selected music to a character-conformation filter section 63 employed in the playlist generation section 18 shown in Fig. 4.

The character-conformation filter section 63 is a unit for generating a character vector having vector components, which are pieces of character information computed by the character extraction section 53 employed in the reproduction-screen generation section 17 or pieces of character information specified by the meter 45 of the reproduction screen 31. For example, the character-conformation filter section 63 generates a character vector D = (o, w, d) having the orientation o, the width w and the depth d as vector components thereof. It is to be noted that character information specified by the meter 45 of the reproduction screen 31 is supplied to the character-conformation filter section 63 by way of the control section 21.

The character-conformation filter section 63 selects a music matching the meaning of the character vector D in a filtering process from specific music identified by IDs each received from the matching process section 62 as the ID of one of the specific music and supplies the selected music to a music characteristic-quantity determination section 64.

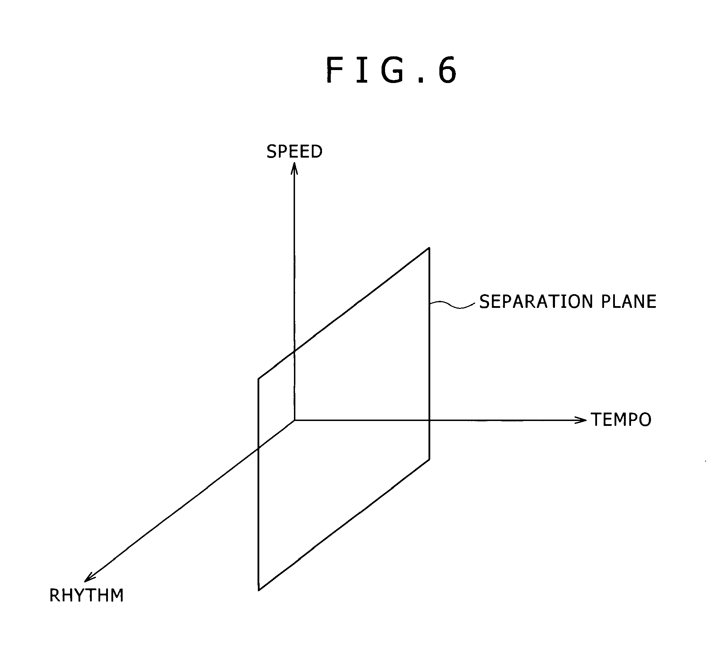

The music characteristic-quantity determination section 64 extracts a music characteristic quantity from history information stored in the history storage section 16. The music characteristic-quantity determination section 64 then generates a separation plane like one shown in Fig. 6 as a plane for separating the liking and disliking feelings from each other for the extracted music characteristic quantity by means of methods such as a SVM (Support Vector Machine) technique, a K_NN technique and a linear determination technique. In addition, the music characteristic-quantity determination section 64 plots music character quantities in metadata stored in the metadata storage section 15 as the metadata of specific music identified by IDs each received from the character-conformation filter section 63 as the ID of one of the specific music. Then, the music characteristic-quantity determination section 64 selects a music having a music characteristic quantity matching a favorite with the user from the specific music identified by IDs each received from the character-conformation filter section 63 as the ID of one of the specific music and supplies the ID of the selected music to a sorting section 65.

The music characteristic quantity of music is a value obtained as a result of an analysis of an audio signal of the music as a value representing the music melody generally expressed in terms of, among others, a speed, a rhythm and a tempo.

For example, the tempo of music is detected as the number of quarter notes in a 1-minute interval from a result of an analysis carried out on periodical repeatability of a sound generation time by observing a peak portion and level of a self correlation function for a sound generation start time of the audio signal representing the music. For more information on the detection of a tempo, the reader is suggested to refer to Japanese Patent Laid-open No. 2002-116754.

In this typical case, the music characteristic quantity of music is included in the metadata of the music and to be extracted from the metadata. However, the music characteristic quantity of music can also be properly obtained as a result of an analysis carried out on an audio signal representing the data of the music.

Let us refer back to Fig. 4. The sorting section 65 is a unit for computing the degree of similarity between a music identified by an ID received from the music characteristic-quantity determination section 64 and a music identified by an ID received from the control section 21. The music identified by an ID received from the control section 21 is music being reproduced. The sorting section 65 sets a rank of the music identified by an ID received from the music characteristic-quantity determination section 64 on the basis of the computed degree of similarity.

It is to be noted that, in this typical case, the music identified by an ID received from the music characteristic-quantity determination section 64 is presented to the user as a recommended music. For this reason, the music identified by an ID received from the music characteristic-quantity determination section 64 is also referred to as a recommended music.

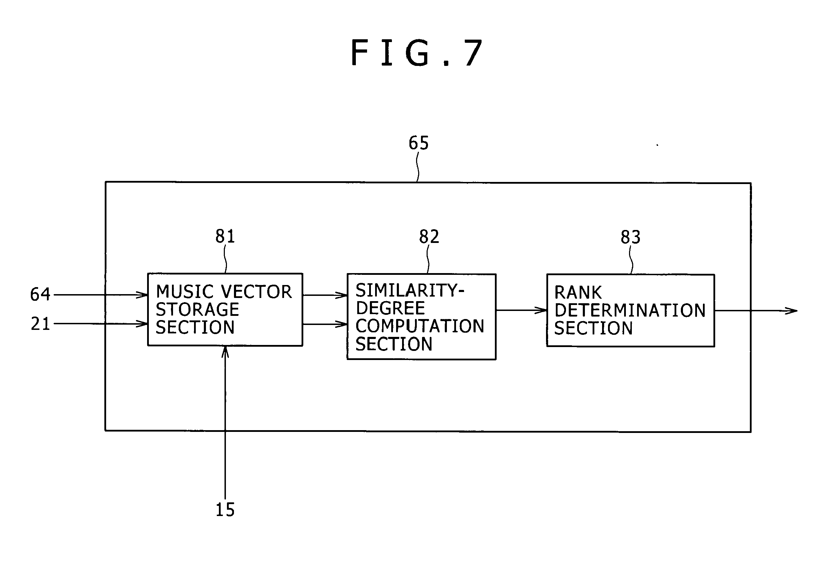

Fig. 7 is a block diagram showing a typical configuration of the sorting section 65 employed in the playlist generation section 18 shown in Fig. 4.

Much like the music vector storage section 71 employed in the matching process section 62 shown in Fig. 5, a music vector storage section 81 is a unit for generating a music vector for each music from metadata stored in the metadata storage section 15 as the metadata of the music and storing the music vector therein.

The music vector storage section 81 supplies a music vector stored therein by associating the music vector with a recommended music ID and a music vector stored therein by associating the music vector with a reproduced music ID to a similarity-degree computation section 82. The recommended music ID is a music ID received from the music characteristic-quantity determination section 64 as the ID of a recommended music whereas the reproduced music ID is a music ID received from the control section 21 as the ID of a reproduced music.

The similarity-degree computation section 82 is a unit for computing each degree of similarity in accordance with Eq. (1) from every one of music vectors each received from the music vector storage section 81 as a vector of recommended music and the music vector of the reproduced music. The similarity-degree computation section 82 supplies the computed degrees of similarity to a rank determination section 83 along with the music vectors of recommended music.

The rank determination section 83 is a unit for determining the rank for each individual one of the recommended music on the basis of the similarity degree received from the similarity-degree computation section 82 and supplies the rank to a screen construction section 66 employed in the playlist generation section 18 shown in Fig. 4 along with the ID of the individual recommended music.

The screen construction section 66 is a unit for reading out the title of every one of the recommended music each identified by an ID received from the sorting section 65 from the metadata storage section 15 and for generating a playlist showing the titles of the recommended music in an order based on ranks determined by the sorting section 65 as the ranks of the recommended music.

In this typical case, in order to display the playlist by superposing the playlist on the reproduction screen 31 shown in Fig. 2, the screen construction section 66 supplies the playlist to the display section 20 by way of the display control section 19. As an alternative, however, the generated playlist is not displayed on the display section 20. In this case, the generated playlist is supplied to the control section 21 and music on the top of the playlist is automatically reproduced. The music on the top of the playlist is a music most recommended to the user.

In the typical reproduction apparatus 1 shown in Fig. 1, the data of music is stored in the music-data storage section 14. It is to be noted, however, that in an alternative configuration, the reproduction apparatus 1 is provided with a function for communicating with an apparatus determined in advance as an apparatus for distributing music by way of a network. In this alternative configuration, the data of a music distributed by the apparatus determined in advance is received from this apparatus. It is also to be noted that the apparatus determined in advance and the network are not shown in the figure.

In addition, in the playlist generation section 18 shown in Fig. 4, the character-conformation filter section 63 is placed between the matching process section 62 and the music characteristic-quantity determination section 64. However, it is also possible to provide a configuration in which the character-conformation filter section 63 is placed between the content select section 61 and the matching process section 62 or between the music characteristic-quantity determination section 64 and the sorting section 65.

In addition, in the typical reproduction apparatus 1 shown in Fig. 1, when a degree of mania is specified by making use of the meter 45 included in the reproduction screen 31, a music corresponding to the specified degree of mania is recommended to the user. However, it is also possible to provide a configuration in which metadata corresponding to the specified degree of mania is displayed on the metadata display portion 41 of the reproduction screen 31.

In addition, in the reproduction screen 31 shown in Fig. 2, character information representing a character exhibited by the user with respect to music is displayed and can be changed. However, it is also possible to provide a configuration in which the orientation, width and depth of a music are extracted as character information representing a character exhibited by the user with respect to the music whereas indexes for the orientation, the width and the depth are displayed and can be changed.

Next, processing carried out by the reproduction apparatus 1 shown in Fig. 1 to recommend a music to the user is explained by referring to a flowchart shown in Fig. 8.

As shown in Fig. 8, the flowchart begins with a step S1 at which music determined in advance is reproduced. Then, at the next step S2, the control section 21 employed in the reproduction apparatus 1 controls the reproduction-screen generation section 17 to generate a reproduction screen 31 shown in Fig. 2 and controls the display control section 19 to display the screen on the display section 20.

At that time, the screen construction section 54 employed in the reproduction-screen generation section 17 as shown in Fig. 3 constructs the reproduction screen 31 typically showing metadata received from the metadata extraction section 51 on the metadata display portion 41 in a ticker display and metadata received from the metadata extraction section 52 on the metadata display portion 42 as lists.

Then, at the next step S3, the control section 21 produces a result of determination as to whether or not termination of the reproduction of the music data has been requested. If the determination result produced in the process carried out at the step S3 indicates that termination of the reproduction of the music data has not been requested, the flow of the processing represented by this flowchart goes on to a step S4 at which the control section 21 produces a result of determination as to whether or not metadata in the metadata display portion 41 of the reproduction screen 31 has been selected.

If the determination result produced in the process carried out at the step S4 indicates that metadata in the metadata display portion 41 has been selected, the flow of the processing represented by this flowchart goes on to a step S5 at which the control section 21 notifies the playlist generation section 18 of the selected metadata. In the following description, the metadata determined in the process carried out at the step S4 to be metadata already selected is referred to as selected metadata.

By referring to the metadata storage section 15, the content select section 61 employed in the playlist generation section 18 as shown in Fig. 4 selects music each having metadata including the selected metadata reported by the control section 21 and notifies the matching process section 62 of the selected music.

Then, at the next step S6, in accordance with Eq. (1), the matching process section 62 employed in the playlist generation section 18 computes the degree of similarity between the music vector of each of the selected music reported by the content select section 61 and a user favorite vector. Subsequently, the matching process section 62 selects N music each having a high degree of similarity and notifies the character-conformation filter section 63 employed in the playlist generation section 18 of the N selected music.

Then, at the next step S7, the character-conformation filter section 63 selects specific music from the music reported by the matching process section 62. The specific music each match information extracted by the character extraction section 53 employed in the reproduction-screen generation section 17 as information on the character of the user or matches information specified by the meter 45 of the reproduction screen 31 as information on the character of the user. Then, the character-conformation filter section 63 notifies the music characteristic-quantity determination section 64 of the specific music.

Then, at the next step S8, the music characteristic-quantity determination section 64 employed in the playlist generation section 18 generates a separation plane shown in Fig. 6 as a plane corresponding to a music characteristic quantity matching a favorite with the user. Then, the music characteristic-quantity determination section 64 selects particular music each having a music characteristic quantity matching the favorite on the basis of a positional relation between the music characteristic quantities of the specific music reported by the character-conformation filter section 63 and the separation plane. Subsequently, the music characteristic-quantity determination section 64 notifies the sorting section 65 employed in the playlist generation section 18 of the particular music.

Then, at the next step S9, in accordance with Eq. (1), the sorting section 65 computes a degree of similarity between each of the particular music each reported by the music characteristic-quantity determination section 64 as a recommended music and a reproduced music (or music being reproduced). Then, the sorting section 65 determines a rank of each individual one of the recommended music in accordance with the similarity degree computed for the individual recommended music subsequently, the sorting section 65 notifies the screen construction section 66 employed in the playlist generation section 18 of the recommended music and their ranks.

Then, at the next step S10, the screen construction section 66 reads out the titles of the recommended music reported by the sorting section 65 from the metadata storage section 15 and generates a playlist showing the titles in the order of the recommended music sorted in accordance with their ranks. Subsequently, the screen construction section 66 displays the playlist on the display section 20 through the display control section 19. The playlist is displayed by being superposed on the reproduction screen 31 shown in Fig. 2.

When the user selects a music from those shown on the playlist, the flow of the processing represented by this flowchart goes on to a step S11 at which the control section 21 controls the reproduction section 12 to reproduce the selected music. Then, at the next step S12, the control section 21 updates history information by storing the metadata of the reproduced music in the history storage section 16. It is to be noted that, when the button 44-1 or 44-2 shown in the reproduction screen 31 is operated, an evaluation result according to the operation carried out on the button 44-1 or 44-2 is stored in the history storage section 16 in order to update the history information.

Then, the flow of the processing represented by this flowchart goes back to the step S2 at which a reproduction screen 31 according to the music having its reproduction started in the process carried out at the step S11 is displayed. The reproduction screen 31 displayed this time has been updated in accordance with the music having its reproduction started in the process carried out at the step S11. Then, the execution of the processes of the step S3 and the subsequent steps is repeated in the same way as what has been described above.

If the determination result produced in the process carried out at the step S4 indicates that no metadata in the metadata display portion 41 of the reproduction screen 31 has been selected, on the other hand, the flow of the processing represented by this flowchart goes on to a step S13 at which the control section 21 produces a result of determination as to whether or not metadata in the metadata display portion 42 has been selected and the button 46 has been operated, that is, whether or not conditions for recommended music have been determined.

If the determination result produced in the process carried out at the step S13 indicates that metadata in the metadata display portion 42 has been selected and the button 46 has been operated in order to determine conditions for recommended music, the flow of the processing represented by this flowchart goes on to the step S5 in order to carry out the processes of the step S5 and the subsequent steps in the same way as what has been described above by making use of the selected metadata in the metadata display portion 42.

If the determination result produced in the process carried out at the step S13 indicates that metadata in the metadata display portion 42 has not been selected or the button 46 has been not operated in order to determine conditions for recommended music, on the other hand, the flow of the processing represented by this flowchart goes back to the step S4 to repeat the process of this step in the same way as what has been described above.

If the determination result produced in the process carried out at the step S3 indicates that termination of the reproduction of the music data has been requested, on the other hand, the flow of the processing represented by this flowchart goes on to a step S14 at which the control section 21 terminates the execution of the processing to recommend music to the user in accordance with this flowchart.

As described above, when the metadata of music being reproduced is displayed on the metadata display portion 41 of the reproduction screen 31 in a format allowing any piece of metadata displayed in the metadata display portion 41 to be selected by the user and the user selects a piece of metadata displayed on the metadata display portion 41, recommended music are determined on the basis of the metadata selected by the user. Thus, the metadata serving as a reference of a process to determine a recommended music can be presented to the user. As a result, it is possible to carry out a process to determine a recommended music as a very flexible process.

In addition, in the playlist generation section 18 having a typical configuration shown in Fig. 4, the matching process section 62 selects music on the basis of a user favorite vector. Furthermore, the music characteristic-quantity determination section 64 selects a recommended music on the basis of a music characteristic quantity owned by the music signal itself, which represents the music. Thus, it is possible to recommend a music matching a favorite with the user to the user.

Next, another typical format of the metadata display portion 41 included in the reproduction screen 31 shown in Fig. 2 is explained.

The metadata display portion 41 included in the typical reproduction screen 31 shown in Fig. 2 has display portions 41A and 41B showing the same metadata. However, it is also possible to provide a configuration in which the metadata display portion 41 included in the typical reproduction screen 31 shown in Fig. 2 has display portions 41A and 41B showing different pieces of metadata.

For example, the display portion 41A shows the predetermined items such as an artist, an era, a region, a mood and so on as described earlier. On the other hand, the display portion 41B shows the items different from predetermined items shown in display portion 41A.

In this case, the metadata extraction section 51 employed in the reproduction-screen generation section 17 as shown in Fig. 3 supplies metadata to be displayed in the display portion 41A to the screen construction section 54. The metadata to be displayed in the display portion 41A includes the predetermined items included in metadata stored in the metadata storage section 15 by being associated with an ID received from the control section 21 as the ID of music being reproduced. The predetermined items typically include an artist, an era, a region and a mood. To put it concretely, in the case of the typical metadata display portion 41, the artist, the era, the region and the mood are a female solo singer, the nineties, Okinawa and a up-tempo mood respectively. In addition, the metadata extraction section 51 also supplies metadata to be displayed in the display portion 41B to the screen construction section 54. The metadata to be displayed in the display portion 41B includes items other than the predetermined items. The items other than the predetermined items are included in metadata stored in the metadata storage section 15 by being associated with an ID received from the control section 21 as the ID of music being reproduced.

The screen construction section 54 then constructs a reproduction screen 31 including a display portion 41A showing metadata received from the metadata extraction section 51 as metadata to be displayed in the display portion 41A and a display portion 41B showing metadata received from the metadata extraction section 51 as metadata to be displayed in the display portion 41B.

In addition, it is also possible to provide a configuration in which the metadata display portion 41 included in the typical reproduction screen 31 shown in Fig. 2 has a display portion 41A showing metadata related to music being reproduced and a display portion 41B showing metadata unrelated to music being reproduced. By having such a configuration, it is possible to recommend a music relevant to music being reproduced to the user when the user selects metadata shown in the display portion 41A. In addition, it is also possible to recommend a music irrelevant to music being reproduced to the user when the user selects metadata shown in the display portion 41B. That is to say, for example, it is possible to jump from music being reproduced to a music having a melody and/or a tune, which are entirely different from respectively the melody or tune of the music being reproduced.

In this configuration, the metadata extraction section 51 employed in the reproduction-screen generation section 17 supplies metadata to be displayed in the display portion 41A to the screen construction section 54. The metadata to be displayed in the display portion 41A includes the predetermined items included in metadata stored in the metadata storage section 15 by being associated with an ID received from the control section 21 as the ID of music being reproduced. In addition, the metadata extraction section 51 also supplies metadata to be displayed in the display portion 41B to the screen construction section 54. The metadata to be displayed in the display portion 41B includes items other than the predetermined items. The items other than the predetermined items are included in metadata stored in the metadata storage section 15 by being associated with an ID received from the control section 21 as the ID of a music other than the music being reproduced.

By the same token, the screen construction section 54 then constructs a reproduction screen 31 including a display portion 41A showing metadata received from the metadata extraction section 51 as metadata to be displayed in the display portion 41A and a display portion 41B showing metadata received from the metadata extraction section 51 as metadata to be displayed in the display portion 41B.

In addition, it is also possible to provide a configuration in which the metadata display portion 41 included in the typical reproduction screen 31 shown in Fig. 2 has a display portion 41A showing metadata related to music being reproduced and a display portion 41B displaying a message representing the theme of the entire playlist showing recommended music. An example of the message is a message saying: "A collection of tender songs." By looking at the message displayed in the display portion 41B, the user is capable of knowing, among others, a reason why the music included on the playlist have been recommended.

In this configuration, the metadata extraction section 51 employed in the reproduction-screen generation section 17 supplies metadata to be displayed in the display portion 41A to the screen construction section 54. The metadata to be displayed in the display portion 41A includes the predetermined items included in metadata stored in the metadata storage section 15 by being associated with an ID received from the control section 21 as the ID of music being reproduced. In addition, the metadata extraction section 51 also supplies information to be displayed in the display portion 41B to the screen construction section 54. The information to be displayed in the display portion 41B is the theme of the entire playlist showing recommended music. It is to be noted that the control section 21 receives the theme of the entire playlist showing recommended music from the playlist generation section 18 and passes on the theme to the reproduction-screen generation section 17.

By the same token, the screen construction section 54 then constructs a reproduction screen 31 including a display portion 41A showing metadata received from the metadata extraction section 51 as metadata to be displayed in the display portion 41A and a display portion 41B showing information received from the metadata extraction section 51 as information to be displayed in the display portion 41B.

In addition, it is also possible to provide a configuration in which the metadata display portion 41 included in the typical reproduction screen 31 shown in Fig. 2 has a display portion 41A showing metadata related to music being reproduced and a display portion 41B displaying metadata related to the melody of the music being reproduced.

On the top of that, it is also possible to provide a configuration in which, in addition to the fact that the metadata display portion 41 included in the typical reproduction screen 31 shown in Fig. 2 has display portions 41A and 41B showing different pieces of metadata, for example, the display formats of the display portions 41A and 41B can be changed properly as the user likes. For example, when metadata related to music being reproduced is displayed in the metadata display portion 41, a specific piece of metadata matching a favorite of the user can be shown by emphasizing the specific piece of metadata.

In this configuration, the metadata extraction section 51 employed in the reproduction-screen generation section 17 supplies metadata to be displayed in the metadata display portion 41 to the screen construction section 54. The metadata to be displayed in the metadata display portion 41 includes the predetermined items included in metadata stored in the metadata storage section 15 by being associated with an ID received from the control section 21 as the ID of music being reproduced. In addition, the metadata extraction section 51 produces a result of determination as to whether or not the metadata supplied to the screen construction section 54 matches a favorite with the user on the basis of history information stored in the history storage section 16 and also supplies the result of the determination to the screen construction section 54.

The screen construction section 54 then constructs a reproduction screen 31 including a metadata display portion 41 showing metadata received from the metadata extraction section 51 in a display format according to a result of determination as to whether or not the metadata supplied to the screen construction section 54 matches a favorite with the user.

In addition, in the typical reproduction screen 31 shown in Fig. 2, the same metadata related to music is displayed in the metadata display portion 41 during the whole reproduction process. However, it is also possible to provide a configuration in which metadata is displayed in a way, which varies from time to time, being interlocked with different portions of the music being reproduced.

While a guitar solo music is being reproduced, a message saying: "The person playing a guitar in this performance is ooo." is displayed. When a predetermined part of the so-called chorus portion or the like of the music is reproduced, a message stating: "This is a good part of the music." or "ooo is a music having a similar melody." is displayed.

In this case, information on a music having a melody similar to the chorus portion of the music being reproduced has been stored in a memory. When the metadata extraction section 51 employed in the reproduction-screen generation section 17 receives a signal indicating that the chorus portion is being reproduced from the control section 21, the metadata extraction section 51 supplies the information to the screen construction section 54. An example of the information on a music having a similar melody is the title of the music.

Then, the screen construction section 54 constructs a reproduction screen 31 showing the information received from the metadata extraction section 51 in the metadata display portion 41.

In addition, any piece of metadata displayed in the metadata display portion 41 can be selected as described earlier. However, it is possible to provide a configuration in which, if no metadata displayed in the metadata display portion 41 is selected for a long period of time, metadata drawing attention from the user can be displayed in the metadata display portion 41.

Let us assume for example that pieces of metadata related to music being reproduced are displayed in the metadata display portion 41. In this case, if none of the pieces of metadata displayed in the metadata display portion 41 are selected for a predetermined period of time, metadata irrelevant to the music being reproduced can be displayed among the pieces of metadata related to the music being reproduced.

To put it in detail, the control section 21 measures the lapse of time to select a piece of metadata displayed in the metadata display portion 41 and, if none of the pieces of metadata displayed in the metadata display portion 41 are selected for the predetermined period of time, the control section 21 controls the metadata extraction section 51 employed in the reproduction-screen generation section 17 to extract the metadata irrelevant to the music being reproduced.

In addition, the metadata display portion 41 included in the typical reproduction screen 31 shown in Fig. 2 has two display portions, i. e., the display portions 41A and 41B, which are independent of each other. However, it is possible to provide a configuration in which the metadata display portion 41 has one display portions or three or even more display portions.

In addition, the display portions 41A and 41B each have a long shape lined in the horizontal direction and are parallel to each other. However, it is possible to provide a configuration in which display portions 41A and 41B each having another shape are placed in the metadata display portion 41 in another layout.

The following description concretely explains a technique adopted by the character extraction section 53 employed in the reproduction-screen generation section 17 as shown in Fig. 3 as a technique for generating character information cited before.

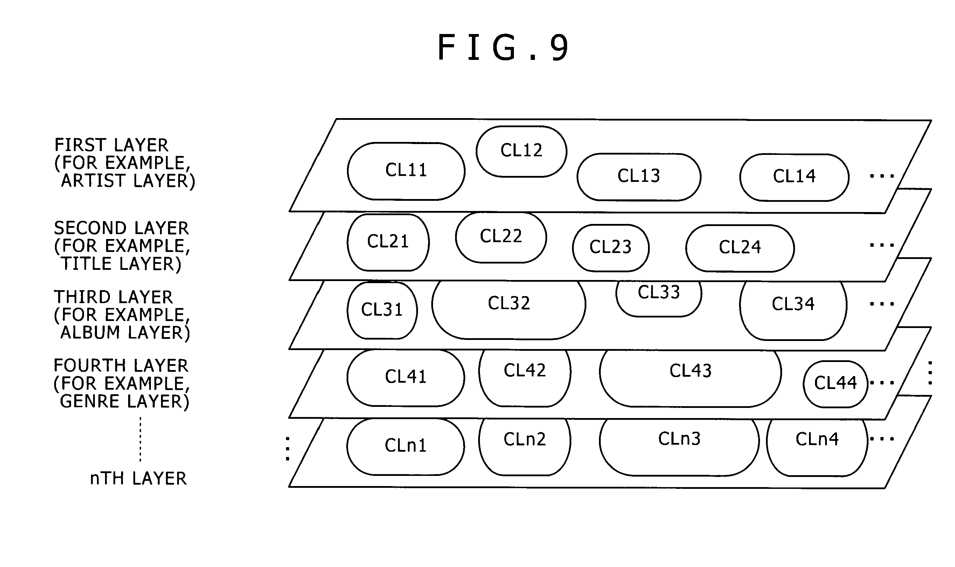

The character extraction section 53 employed in the reproduction-screen generation section 17 classifies real information of metadata items of music into a plurality of clusters in a clustering process, and groups the clusters into a plurality of cluster layers as shown in Fig. 9. In the typical case shown in the figure, the cluster layers are first to nth layers. Stored in the history storage section 16, the metadata items typically include artist, title, album and genre items respectively corresponding to artist, title, album and genre cluster layers shown in the figure.

It is to be noted that a music can have a metadata item (or metadata items) pertaining to a plurality of clusters. A distance between any two clusters put in the same cluster layer is known. Such a distance is the aforementioned degree of similarity.

Then, the character extraction section 53 generates cluster information including an ID of each of clusters obtained as a result of classifying real information of metadata items of music. The cluster information for music is used as information on the characteristic of the music. In the example shown in Fig. 9, notations CL11, CL12 and so on each denote the ID of a cluster.

When the character extraction section 53 carries out the clustering process of classifying real information of metadata items of music as described above, the character extraction section 53 also generates pieces of character information by making use of the result of the clustering process. In the following description, the result of the clustering process is referred to as a multi-viewpoint clustering result.

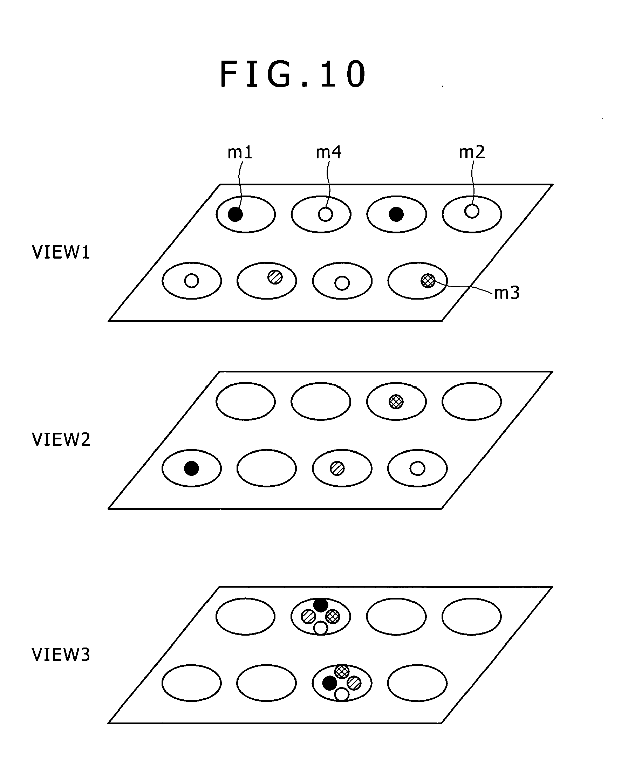

Fig. 10 is an explanatory diagram referred to in description of a method for generating pieces of character information by making use of multi-viewpoint clustering results each corresponding to a cluster layer shown in Fig. 9.

Each of the multi-viewpoint clustering results Views 1 to 3 shown in Fig. 10 includes eight clusters each drawn as an eclipse in the figure. Each of the clusters encircles metadata of one or more music, which include four music m1 to m4 each drawn as a small circle in the figure. As shown in Fig. 10, however, in the multi-viewpoint clustering result View 1, each of the music m1 to m4 pertains to two clusters, in the multi-viewpoint clustering result View 3, the four music m1 to m4 pertain to two clusters and, in the multi-viewpoint clustering result View 2, each of the music m1 to m4 pertains to one cluster. In this way, a music can be expressed by a plurality of clusters. Thus, in the following description, instead of making use of a music count, which is four in the example shown in Fig. 10, a value included in each cluster is used. In the example shown in Fig. 10, a value included in a cluster is the number of circles enclosed in the cluster. In the following description, the value included in a cluster is referred to as a content-entry count representing the number of music pertaining to the cluster.

First of all, a method for generating an orientation is explained. In the following description, the orientation is denoted by notation o.

A measure orientation degree of a music at a certain point of time is defined as a normalized value given by the logarithmic function of the number of times the music has been used so far up to the point of time. The normalized value can be any value in the range 0 to 1.0. In the following description, the number of times a music has been used so far is referred to as a use count.

In this case, the character extraction section 53 finds the measure orientation degree for the user by computing the average of measure orientation degrees of the music being reproduced by the user. The measure orientation degree for the user is taken as an orientation o.

A normalized value is taken as an orientation o because it is necessary to adjust the scale of the orientation o to other pieces of character information such as a width and a depth, which are explained in later description. That is to say, each of the other pieces of character information is also a normalized value.

To put it concretely, let us take the multi-viewpoint clustering results shown in Fig. 10 as an example. The use count of the music m1 is 1024, the use count of the music m2 is 8, the use count of the music m3 is 64 and the use count of the music m4 is 512. In addition, the normalization denominator is 16. That is to say, the use count of the music most reproduced among all music is 65536.

In this case, the orientation o is computed in accordance with Eq. (2). It is to be noted that, in each of equations given below, the base of the logarithmic function is 2. However, the expression of the base is omitted from the equations.

$$o = \{(\log 1024 + \log 8 + \log 64 + \log 512) / 16\} / 4$$
$$= (10 + 3 + 6 + 9) / 16 / 4 = 0.4375 \quad \cdots \quad (2)$$

Next, a method for generating a width is explained. In the following description, the width is denoted by notation w.

The character extraction section 53 finds an entropy $E_v$ for each multi-viewpoint clustering result View v in accordance with Eq. (3) given below. Notation v appended to notation View denoting a multi-viewpoint clustering result is a number assigned to a cluster layer shown in Fig. 10. In the example shown in the figure, the cluster-layer number can be any integer in the range 1 to 3. In the equation, notation $P_{v-i}$ denotes a quotient obtained as a result of dividing a music-entry count $S_{v-i}$ representing the number of music pertaining to a cluster v-i existing on a cluster layer representing the multi-viewpoint clustering result View v by the sum $\Sigma S_{v-i}$ of all entry counts $S_{v-i}$. Notation i denotes a number assigned to a cluster. It is to be noted that, in the example shown in Fig. 10, a cluster number of 1 is assigned to a cluster at the upper left corner of the cluster layer representing the multi-viewpoint clustering result View v. The cluster number is incremented sequentially by 1 for each of three other clusters laid out on the same row in a direction toward the right. That is to say, cluster numbers of 2 to 4 are assigned to the three other clusters respectively. Then, a cluster number of 5 is assigned to a cluster at the lower left corner of the cluster layer. By the same token, the cluster number is incremented sequentially by 1 for each of three other clusters laid out on the same row in a direction toward the right. That is to say, cluster numbers of 6 to 8 are assigned to the three other clusters respectively.

$$E_v = -\sum_i P_{v-i} \log(P_{v-1}) \quad \cdots \quad (3)$$

In the case of a music-entry count of 0 (that is, $P_{v-i} = 0$), however, Eq. (3) is corrected by introducing a fixed infinitesimal value according to a cluster-type count n in order to yield Eqs. (4) to (6) given below as equations used for computing the quotient $P_{v-i}$ and the entropy $E_v$. An example of the fixed infinitesimal value according to the cluster-type count n is the second power of n.

$$P_{v-i} = S_{v-i} / (S + \#0 \times n^{-2}) \quad (\text{for } S_{v-i} \neq 0) \quad \cdots \quad (4)$$

$$P_{v-zero} = n^{-2} / (S + \#0 \times n^{-2}) \quad (\text{for } S_{v-i} = 0) \quad \cdots \quad (5)$$

$$E_v = -\sum P_{v-i} \ \log(P_{v-i}) \ - \ \#0 \times P_{v-zero} \ \log(P_{v-zero}) \quad \cdots \quad (6)$$

where #0 is the number of clusters for entry 0.

Then, the character extraction section 53 normalizes the minimum value $E_{v-min}$ of the entropies $E_v$ found for the multi-viewpoint clustering results View and takes the normalized minimum entropy $E_{v-min}$ as the width w. The normalization process is carried out by making use of an adjusted normalization coefficient that makes the normalized maximum entropy $E_{max}$ determined by the number of clusters equal to 1.0.

To put it concretely, for example, the entropies $E_1$ to $E_3$ of the multi-viewpoint clustering results View 1 to View 3 respectively are computed in accordance with Eqs. (7) to (9) respectively. Thus, the minimum entropy $E_{v-min}$ is determined in accordance with Eq. (10) whereas the maximum entropy $E_{max}$ is determined in accordance with Eq. (11). As a result, the width w is found in accordance with Eq. (12).

$$(\text{View 1}) \ E_1 = 8 \times (-1 \ / \ 8 \ \log(1 \ / \ 8)) = 3.0 \quad \cdots \quad (7)$$

$$(\text{View 2}) \ P_{2-1} = 1 \ / \ (4 + 4 \times 1 \ / \ 8^2) = 16 \ / \ 65$$

$$P_{2-0} = (1 \ / \ 8^2) \ / \ (4 + 4 \times 1 \ / \ 8^2) = 1 \ / \ 260$$

$$E_2 = -4 \times P_{2-1} \ \log P_{2-1} -4 \times P_{2-0} \ \log P_{2-0} = 2.11 \quad \cdots \quad (8)$$

$$(\text{View 3}) \ P_{3-1} = 4 \ / \ (8 + 6 \times 1 \ / \ 8^2) = 128 \ / \ 259$$

$$P_{3-0} = (1 \ / \ 8^2) \ / \ (8 + 6 \times 1 \ / \ 8^2) = 1 \ / \ 518$$

$$E_3 = -2 \times P_{3-1} \ \log P_{3-1} -6 \times P_{3-0} \ \log P_{3-0} = 1.11 \quad \cdots \quad (9)$$

$$\therefore \ E_{v-min} = E_3 = 1.11 \quad \cdots \quad (10)$$

$$E_{max} = -\sum 1 \ / \ 8 \ \log(1 \ / \ 8) = 3 \quad \cdots \quad (11)$$

$$\therefore \ w = E_{v-min} \ / \ 3 = 1.11 \ / \ 3 = 0.37 \quad \cdots \quad (12)$$

Next, a method for generating a depth is explained. In the following description, the depth is denoted by notation d.

In this case, the character extraction section 53 identifies a multi-viewpoint clustering result View having its entropy $E_v$, which is used in the computation of the width w, equal to the minimum entropy $E_{v-min}$. Then, the content-entry count $S_{v-i}$ of a specific cluster included in the multi-viewpoint clustering result View as a cluster having the largest quotient $P_{v-i}$ among all clusters in the multi-viewpoint clustering result View is normalized by dividing the content-entry count $S_{v-i}$ of the specific cluster by the maximum content-entry count $S_{v-i-max}$ for all users to give the depth d.

To put it concretely, let us assume for example that the maximum content-entry count $S_{v-i-max}$ for all users is 100. In the case of the example shown in Fig. 10, the character extraction section 53 identifies the multi-viewpoint clustering result View 3 as a cluster layer having its entropy $E_3$ equal to the minimum entropy $E_{v-min}$, which is 1.11. Then, the character extraction section 53 identifies specific clusters 3-2 and 3-7 each having the largest quotient $P_{v-i}$ (or the largest content-entry count $S_{v-i}$ of 4 as indicated in Eq. (13)) among all clusters in the multi-viewpoint clustering result View. Finally, the character extraction section 53 divides the largest content-entry count $S_{v-i}$ by the maximum content-entry count $S_{v-i-max}$ in accordance with Eq. (14) in order to find the depth d.

$$S_{v-i} = S_{3-2} = S_{3-7} = 4 \quad \cdots \quad (13)$$

$$\therefore d = 4 / 100 = 0.04 \quad \cdots \quad (14)$$

As described above, the character extraction section 53 is capable of computing the pieces of character information such as the orientation o, the width w and the depth d. Then, the character extraction section 53 generates a vector D (o, w, d), which has the computed pieces of character information such as the orientation o, the width w and the depth d as its vector components.

The description given so far explains a case of recommending a music to the user. It is to be noted, however, that the present invention can be applied to any other content as far as the other content has a predetermined characteristic quantity that can be found as a result of analyzing a signal representing the other content.

By the way, the series of processes described previously can be carried out by hardware and/or execution of software. If the series of processes described above is carried out by execution of software, programs composing the software can be installed into typically a general-purpose computer implementing the functions of the reproduction apparatus 1.

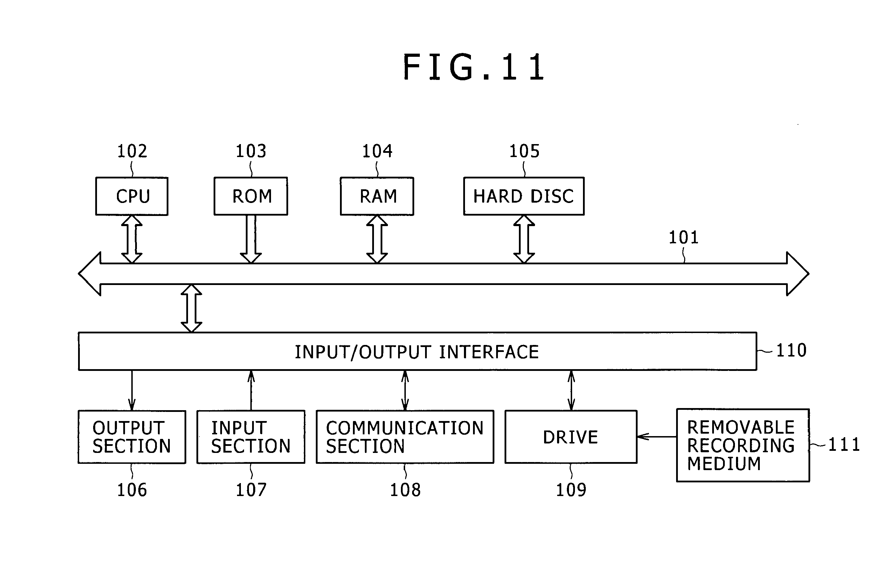

Fig. 11 is a block diagram showing a typical configuration of an embodiment implementing the aforementioned computer in which programs to be executed to carry out the series of processes described previously are installed.

In the computer, the programs can be stored in an embedded hard disc 105 or an embedded ROM (Read Only Memory) 103 in advance.

As an alternative, the programs can also be stored (or recorded) temporarily or permanently in a removable recording medium 111. Examples of the removable recording medium 111 include a flexible disc, an optical disc such as a CD-ROM (Compact Disc-Read Only Memory), an MO (Magneto Optical) disc, a DVD (Digital Versatile Disc), a magnetic disc, and a semiconductor memory. The programs stored in the removable recording medium 111 are collectively referred to as the so-called package software presented to the user as software to be installed in the computer.

It is to be noted that, in addition to the installation of the programs from the removable recording medium 111 described above into the computer, the programs can also be downloaded from an external download site to the computer. In this case, the programs are transmitted from the download site to the computer by a radio communication through an artificial satellite functioning as a digital satellite broadcasting satellite or by a wire communication through a network such as a LAN (Local Area Network) or the Internet. In the computer, the programs transmitted from the download site are received by a communication section 108 and installed into the hard disc 105 cited above.

The computer has a CPU (Central Processing Unit) 102 embedded therein. The CPU 102 is connected by a bus 101 to an input/output interface 110. When the user operates an input section 107 typically including a keyboard, a mouse and a microphone, the input section 107 transfers a command representing the operation carried out by the user to the CPU 102 by way of the input/output interface 110 and the bus 101. Then, the CPU 102 executes one of the programs stored in the ROM 103 as a program according to the command. As an alternative, the CPU 102 loads one of the programs already installed in the hard disc 105 as a program according to the command from the hard disc 105 to a RAM (Random Access Memory) 104 and executes the program. As described above, the program installed in the hard disc 105 to be executed by the CPU 102 has been downloaded from a download site to the computer by transmitting the program from the download site to the computer by a radio communication through an artificial satellite functioning as a digital satellite broadcasting satellite or by a wire communication through a network such as the Internet. As another alternative, the program installed in the hard disc 105 to be executed by the CPU 102 has been transferred from the removable recording medium 111 to the hard disc 105 when the removable recording medium 111 is mounted on a drive 109 of the computer. The CPU 102 executes a program (or programs) in order to carry out the processing represented by the flowchart described earlier by referring to the flowchart shown in Fig. 8 or processing according to a configuration shown in one of the block diagrams explained before. Then, if necessary, through the bus 101 and the input/output interface 110, the CPU 102 outputs the result of the processing to an external destination by way of an output unit 106 and/or transmits the result to the network by way of the communication section 108. In addition, the CPU 102 also stores the result of the processing in the hard disc 105 through the bus 101. Typically, the output unit 106 includes an LCD (Liquid Crystal Display) and a speaker.

It is also worth noting that, in this specification, steps of the flowchart described above can be carried out in a pre-prescribed order along the time axis, and also concurrently or individually in, for example, parallel processing or object processing.

In addition, a program can be executed by a computer or by a plurality of computers in distributed processing. On the top of that, a program can be transmitted to a computer installed at a remote location to be executed by the computer.

It is to be noted that implementations of the present invention are by no means limited to the embodiments described above. That is to say, any changes can be made to the embodiments as long as the changes are in a range not deviating from the present invention.

In addition, it should be understood by those skilled in the art that a variety of modifications, combinations, sub-combinations and alterations may occur in dependence on designs and other factors insofar as they are within the scope of the appended claims or the equivalents thereof.

**Claims**

1. A display control processing apparatus comprising:

   display control means configured to display pieces of metadata for a predetermined group of music each serving as a favorite with a user on a metadata display portion for displaying said pieces of metadata in a format allowing said user to specify a desired piece of said metadata;
   specification means configured to specify a piece of said metadata displayed on said metadata display portion by said display control means;
   determination means configured to select a music with its metadata corresponding to metadata specified by said specification means from said pieces of metadata displayed by said display control means on said metadata display portion as metadata for said predetermined group of music and to determine said selected music as music to be recommended to said user; and
   reproduction means configured to reproduce music determined by said determination means;

   wherein said display control means displays specific metadata corresponding to the metadata of music being reproduced by said reproduction means on said metadata display portion while moving said specific metadata.

2. The display control processing apparatus according to claim 1 wherein said display control means displays metadata matching a favorite with said user on said metadata display portion in a format different from other metadata.

3. The display control processing apparatus according to claim 1 or 2 wherein said display control means displays metadata for music being reproduced by said reproduction means on said metadata display portion in a state of being interlocked with said music.

4. The display control processing apparatus according to any one of claims 1 to 3 wherein said display control means measures the length of time in which metadata is not specified and displays said metadata on said metadata display portion in a format according to said measured length.

5. The display control processing apparatus according to any one of the preceding claims wherein
   said metadata display portion includes a first display portion and a second display portion, and
   said display control means displays metadata on said first display portion as metadata having a predetermined relation with metadata displayed on said second display portion.

6. The display control processing apparatus according to any one of the preceding claims further including
   characteristic/character generation means configured to generate music characteristic information representing the characteristic of a music or user character information representing a character exhibited by said user with respect to music of a type determined in advance,
   wherein said display control means:

   displays the degree of a characteristic represented by said music characteristic information generated by said characteristic/character generation means or the degree of a character represented by said user character information generated by said characteristic/character generation means on a characteristic/character display portion;

receives a change specified as a change of said degree of a characteristic represented by said music characteristic information or a change of said degree of a character represented by said user character information; and

displays metadata corresponding to said change of said degree of a characteristic represented by said music characteristic information or said change of said degree of a character represented by said user character information on said metadata display portion.

**7.** The display control processing apparatus according to any one of the preceding claims wherein

said metadata display portion includes a first display portion and a second display portion;

said metadata display portion displays

a plurality of pieces of said metadata on said first display portion while moving said pieces of said metadata over said metadata display portion,

for each metadata group, a plurality of predetermined pieces of said metadata on said second display portion in a format allowing any one of said pieces of said metadata to be specified; and

said determination means selects, when any one of said pieces of said metadata displayed on said second display portion is specified, a music having metadata corresponding to said specified piece of said metadata and recommends said selected music to said user as a recommended music.

**8.** A display control processing method including the steps of:

displaying pieces of metadata for a predetermined group of music each serving as a favorite with a user on a metadata display portion for displaying said pieces of metadata in a format allowing said user to specify a desired piece of said metadata;

specifying a piece of said metadata displayed on said metadata display portion in a process carried out at said display control step;

selecting a music with its metadata corresponding to metadata specified in a process carried out at said metadata specification step from said pieces of said metadata displayed in a process carried out at said display control step on said metadata display portion as metadata for said predetermined group of music and determining said selected music as music to be recommended to said user; and

reproducing a content determined in a process carried out at said content determination step;

wherein said display control step is carried out to display specific metadata corresponding to the metadata of music being reproduced in a process carried out at said content reproduction step on said metadata display portion while moving said specific metadata.

**9.** A display control processing program to be executed by a computer to carry out a display control process comprising the steps of:

displaying pieces of metadata for a predetermined group of music each serving as a favorite with a user on a metadata display portion for displaying said pieces of metadata in a format allowing said user to specify a desired piece of said metadata;

specifying a piece of said metadata displayed on said metadata display portion in a process carried out at said display control step;

selecting a music with its metadata corresponding to metadata specified in a process carried out at said metadata specification step from said pieces of said metadata displayed in a process carried out at said display control step on said metadata display portion as metadata for said predetermined group of music and determining said selected music as music to be recommended to said user; and

reproducing a content determined in a process carried out at said content determination step;

wherein said display control step is carried out to display specific metadata corresponding to the metadata of music being reproduced in a process carried out at said content reproduction step on said metadata display portion while moving said specific metadata.

**10.** A display control processing apparatus comprising:

a display control section configured to display pieces of metadata for a predetermined group of music each serving as a favorite with a user on a metadata display portion for displaying said pieces of metadata in a format allowing said user to specify a desired piece of said metadata;

a specification section configured to specify a piece of said metadata displayed on said metadata display portion by said display control section;

a determination section configured to select a music with its metadata corresponding to metadata specified by said specification section from said pieces of metadata displayed by said display control section on said metadata display portion as metadata for said predetermined group of music and to determine said selected music as music to be recommended to said user; and

a reproduction section configured to reproduce music determined by said determination section;

wherein said display control section displays specific metadata corresponding to the metadata of music being reproduced by said reproduction section on said metadata display portion while moving said specific metadata.

# FIG.1

EP 1 930 902 A1

# FIG.2

31

| | |
|---|---|
| Namie Anmuro | Mike Jackson |
| a wart in the pert | Remember The Time |
| 04 00 | 41A |

32

PRINCIPAL SOLO ARTIST   FEMALE SOLO   THE NINETIES   OKINAWA   COOL   SEXY   UP-TEMPO   PLEASANT   CHEERY

41

LO ARTIST   FEMALE SOLO   THE NINETIES   OKINAWA   COOL   SEXY   UP-TEMPO   PLEASANT   CHEERY

45

RECOMMENDED SETTING

17.1490833  50%

MUSIC EVALUATION  41B  43-1  43-2
44-1

Iknow  TOUCH METER
44-2  46

MANIA DEGREE   50.0%   RIPENESS   50.0%

| GENRE | BE RECOMMENDED BY VARIOUS KEYWORDS | MOOD |
|---|---|---|
| WESTERN MUSIC > FOLK | REPRODUCE A RECOMMENDED CONTENT UNDER THESE CONDITIONS   CLEAR CONDITIONS | UP-TEMPO |
| WESTERN MUSIC > BLUES | | PLEASANT |
| WESTERN MUSIC > RAP/HIP-HOP | | CREERY |
| WESTERN MUSIC > ROCK/POP | ARTIST          MUSIC | QUIET |
| WESTERN MUSIC > WORLD/REGGAE | LOVE            HIKARI | MELANCHOLY |
| WESTERN MUSIC > VOCAL | NAMIE ANMURO    Private Eyes | REFRESHING |
| WESTERN MUSIC > RELIGIOUS SONG/GOSPEL | HIKARU TADA     a wart in the part | HEALING |
| WESTERN MUSIC > RECITATION | Ms. Child       THE NEWFOLK | ELEGANT |
| JAPANESE MUSIC > THE SIXTIES/ THE EIGHTIES | 3 A.M.eternal[Live at The S | SOLEMN |
| JAPANESE MUSIC > JAPANESE POP | Last Smile | HAPPY |
| JAPANESE MUSIC > ANIMATION/VOICE ARTIST | Crazy For You | PLEASANT |
| JAPANESE MUSIC > ELECTRONIC | Remember The Time | PASSIONATE |
| JAPANESE MUSIC > ALTERNATIVE | Call it Love | OPEN MOOD |
| JAPANESE MUSIC > CLASSIC | Kesson Dalef | ENCOURAGING |
| JAPANESE MUSIC > SOUND TRACK | | GORGEOUS |
| JAPANESE MUSIC > JAZZ | | LONELY |
| JAPANESE MUSIC > SOUL/R & B | | SENTIMENTAL |
| JAPANESE MUSIC > NEW AGE | | VAIN |
| JAPANESE MUSIC > FOLK | | TIRED |
| JAPANESE MUSIC >RAP/HIP-HOP | | SLEEPY |
| JAPANESE MUSIC > ROCK | | PITIFUL |
| | KEYWORD-BASED SEARCH      SEARCH | NOSTALGIC |

42

RECOMMENDATION LIST DISPLAY    USER INFORMATION REGISTRATION

RPT  EQ  PL

# FIG.3

# F I G . 4

EP 1 930 902 A1

# FIG. 5

EP 1 930 902 A1

```
                                    62

        71                                      74              75

   ┌──────────┐                          ┌──────────┐    ┌──────────┐
61 │ MUSIC VECTOR │                      │ SIMILARITY- │  │ MUSIC    │
──▶│ STORAGE      │─────────────────────▶│ DEGREE      │─▶│ DETERMINATION │──▶
   │ SECTION      │                      │ COMPUTATION │  │ SECTION  │
   └──────────┘                          │ SECTION     │  └──────────┘
                          73             └──────────┘

   ┌──────────┐    ┌──────────┐
   │ USER FAVORITE │ │ USER FAVORITE │
   │ VECTOR        │ │ VECTOR        │
   │ GENERATION    │▶│ STORAGE       │
   │ SECTION       │ │ SECTION       │
   └──────────┘    └──────────┘

        72

        15
```

# FIG.6

SPEED

SEPARATION PLANE

TEMPO

RHYTHM

EP 1 930 902 A1

# FIG.7

# F I G . 8

( MUSIC RECOMMENDATION PROCESSING START )

REPRODUCE MUSIC — S1

DISPLAY REPRODUCTION SCREEN — S2
(DISPLAY MUSIC METADATA FOR FAVORITES)

YES / WAS REPRODUCTION TERMINATION REQUESTED? \ S3

NO

WAS METADATA IN METADATA — S4
DISPLAY SECTION 41 SELECTED? \ NO

YES

WAS METADATA IN METADATA — S13
DISPLAY SECTION 42 SELECTED? \ NO

YES

TERMINATE — S14
REPRODUCTION

SELECT MUSIC HAVING METADATA — S5
CORRESPONDING TO SELECTED MUSIC METADATA

PERFORM MATCHING OF VECTOR OF MUSIC SELECTED — S6
ON THE BASIS OF METADATA AND USER FAVORITE
VECTOR AND SELECT MUSIC EACH HAVING HIGH
DEGREE OF SIMILARITY

SELECT MUSIC MATCHING CHARACTER OF USER — S7
FROM MUSIC SELECTED BY MATCHING

DETERMINE MUSIC CHARACTERISTIC QUANTITY — S8
FOR MUSIC MATCHING CHARACTER
OF USER AND SELECT MUSIC HAVING MUSIC
CHARACTERISTIC QUANTITY MATCHING FAVORITE

SORT MUSIC SELECTED BY DETERMINATION OF — S9
MUSIC CHARACTERISTIC QUANTITIES ON THE
BASIS OF SIMILARITY TO REPRODUCED MUSIC

GENERATE PLAYLIST SHOWING MUSIC TITLES — S10
IN SORTED ORDER AND DISPLAY PLAYLIST

REPRODUCE SELECTED MUSIC — S11

UPDATE HISTORY — S12

( END )

# F I G . 9

FIRST LAYER
(FOR EXAMPLE,
ARTIST LAYER)

SECOND LAYER
(FOR EXAMPLE,
TITLE LAYER)

THIRD LAYER
(FOR EXAMPLE,
ALBUM LAYER)

FOURTH LAYER
(FOR EXAMPLE,
GENRE LAYER)

nTH LAYER

CL11  CL12  CL13  CL14  ...

CL21  CL22  CL23  CL24  ...

CL31  CL32  CL33  CL34  ...

CL41  CL42  CL43  CL44  ...

CLn1  CLn2  CLn3  CLn4  ...

EP 1 930 902 A1

# FIG.10

VIEW1

m1  m4  m2

m3

VIEW2

VIEW3

# FIG.11

EP 1 930 902 A1

## EUROPEAN SEARCH REPORT

**European Patent Office**

| | Application Number |
|---|---|
| | EP 07 25 4140 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 548 740 A (BOSE CORP [US]) 29 June 2005 (2005-06-29) * the whole document * ----- | 1-10 | INV. G11B27/10 G11B27/34 |
| X | US 5 616 876 A (CLUTS JONATHAN C [US]) 1 April 1997 (1997-04-01) * figures 4-11 * * column 3, lines 18-36 * * column 4, lines 45-65 * * column 13, line 63 - column 14, line 37 * * column 20, lines 1-20,53-65 * ----- | 1-10 | |
| X | WO 2005/022528 A (KONINKL PHILIPS ELECTRONICS NV [NL]; BUIL VINCENTIUS P [NL]; GEURTS LU) 10 March 2005 (2005-03-10) * figures 1-3 * * the whole document * ----- | 1-10 | |
| X | US 6 545 209 B1 (FLANNERY FRANK P [US] ET AL) 8 April 2003 (2003-04-08) * the whole document * ----- | 1-10 | TECHNICAL FIELDS SEARCHED (IPC) G11B G06F |
| A | US 2006/218187 A1 (PLASTINA DANIEL [US] ET AL) 28 September 2006 (2006-09-28) * paragraphs [0008], [0022], [0028] - [0034], [0042], [0043]; figures 1A,2 * ----- | 1-10 | |
| A | US 2005/172786 A1 (PLASTINA DANIEL [US] ET AL) 11 August 2005 (2005-08-11) * the whole document * ----- | 1-10 | |

The present search report has been drawn up for all claims

| Place of search | Date of completion of the search | Examiner |
|---|---|---|
| The Hague | 8 April 2008 | Doyle, Walter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 25 4140

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2008

| Patent document cited in search report | | Publication date | Patent family member(s) | | Publication date |
|---|---|---|---|---|---|
| EP 1548740 | A | 29-06-2005 | CN<br>JP | 1637743 A<br>2005243214 A | 13-07-2005<br>08-09-2005 |
| US 5616876 | A | 01-04-1997 | NONE | | |
| WO 2005022528 | A | 10-03-2005 | CN<br>JP<br>KR<br>US | 1842856 A<br>2007504578 T<br>20060121852 A<br>2006224259 A1 | 04-10-2006<br>01-03-2007<br>29-11-2006<br>05-10-2006 |
| US 6545209 | B1 | 08-04-2003 | NONE | | |
| US 2006218187 | A1 | 28-09-2006 | CN<br>EP<br>JP<br>KR | 1838120 A<br>1705584 A1<br>2006277917 A<br>20060103102 A | 27-09-2006<br>27-09-2006<br>12-10-2006<br>28-09-2006 |
| US 2005172786 | A1 | 11-08-2005 | US | 2005198075 A1 | 08-09-2005 |

EPO FORM P0459

For more details about this annex : see Official Journal of the European Patent Office, No. 12/82

**EP 1 930 902 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006332226 A
- JP 2004194107 A
- JP 2002116754 A